# EUROPEAN PATENT APPLICATION

(11) **EP 4 404 648 A1**
(43) Date of publication of application: **24.07.2024**
(21) Application number: 22881189.9
(22) Date of filing: 22.08.2022
(51) Int. Cl.: H04W 64/00, H04W 24/10, H04W 72/04

(54) **POSITIONING REFERENCE DEVICE OPERATION METHOD FOR MEASURING PRECISE LOCATION IN WIRELESS COMMUNICATION SYSTEM**

(30) Priority: 15.10.2021 KR 20210137346
(71) Applicant: Samsung Electronics Co., Ltd., Suwon-si, Gyeonggi-do 16677 (KR)
(72) Inventor: HWANG, June, Suwon-si, Gyeonggi-do 16677 (KR); LEE, Taeseop, Suwon-si, Gyeonggi-do 16677 (KR)
(74) Representative: Gulde & Partner
(86) International application number: PCT/KR2022/012478
(87) International publication number: WO 2023/063559

(57) **Abstract**

The present disclosure relates to a communication technique for converging IoT technology with a 5G communication system for supporting a higher data transmission rate beyond a 4G system, and a system therefor. The present disclosure may be applied to an intelligent service (for example, a smart home, a smart building, a smart city, a smart car or connected car, health care, digital education, retail business, a security and safety-related service, etc.) on the basis of 5G communication technology and IoT-related technology. The present disclosure discloses a method and a device, in which, in a wireless communication system, when a location server provides assistance information for measuring location information to a reference signal target terminal which has been set by the location server, the assistance information is provided by having specific time and region information linked thereto, and the terminal obtains the location information by measuring using the assistance information.

## Description

### [Technical Field]

The disclosure relates to a method and device, in which, in a wireless communication system, when a location server provides the assistance information for measuring location information which has been configured by the location server itself to a reference signal target terminal, the assistance information is provided by having specific time and region information linked thereto, and the terminal obtains the location information by measuring using the assistance information.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system". The 5G communication system is considered to be implemented in ultrahigh frequency (mmWave) bands, (e.g., 60GHz bands,) so as to accomplish higher data rates. To decrease propagation loss of the radio waves and increase the transmission distance, the beamforming, massive multiple-input multiple-output(MIMO), full dimensional MIMO(FD-MIMO), array antenna, an analog beam forming, large scale antenna techniques are discussed in 5G communication systems. In addition, in 5G communication systems, development for system network improvement is underway based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine(M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

As described above, with the development of wireless communication systems, various services may be provided, and a method for effectively providing these services is required. For example, the location server performs an operation of estimating a location from a measurement result of location reference signals received from a terminal in order to effectively provide services. In this case, the location server estimates the location of the target terminal by using the location reference signal measurement result from the target terminal. In this case, the location server is bound to make location estimates with some degree of error due to the uncertainty in the wireless section.

### [Disclosure of Invention]

### [Technical Problem]

Therefore, the disclosure is to provide a method for increasing the location estimation accuracy of a location server by introducing a positioning reference device.

### [Solution to Problem]

A method of a positioning reference unit (PRU) in a communication system according to an embodiment of the disclosure may include transmitting, to a location management function (LMF) entity, a first message including PRU indication information indicating the PRU; receiving, from the LMF entity, a request message for requesting provision of location-related information based on the first message; performing a measurement of a location based on the request message; and transmitting, to the LMF entity, a second message including a result of the measurement and location information of the PRU, wherein the location information of the PRU includes at least one of location coordinate information or antenna direction information based on the request message.

In addition, a method of a location management function (LMF) entity in a communication system according to an embodiment of the disclosure may include receiving, from a positioning reference unit (PRU), a first message including PRU indication information indicating the PRU; transmitting, to the PRU, a request message for requesting provision of location-related information based on the first message; receiving, from the PRU, a second message including a result of location measurement and location information of the PRU, based on the request message; and determining an error value for configuring a reference signal by using a location estimated based on the second message, wherein the location information of the PRU includes at least one of location coordinate information or antenna direction information based on the request message.

In addition, a positioning reference unit (PRU) in a communication system according to an embodiment of the disclosure may include a transceiver; and a controller configured to control the transceiver to transmit, to a location management function (LMF) entity, a first message including PRU indication information indicating the PRU, control the transceiver to receive, from the LMF entity, a request message for requesting provision of location-related information based on the first message, perform a measurement of a location based on the request message, and control the transceiver to transmit, to the LMF entity, a second message including a result of the measurement and location information of the PRU, wherein the location information of the PRU includes at least one of location coordinate information or antenna direction information based on the request message.

The location information of the PRU may include at least one of location coordinate information or antenna direction information based on the request message.

In addition, a location management function (LMF) entity in a communication system according to an embodiment of the disclosure may include a transceiver; and a controller configured to control the transceiver to receive, from a positioning reference unit (PRU), a first message including PRU indication information indicating the PRU, control the transceiver to transmit, to the PRU, a request message for requesting provision of location-related information based on the first message, control the transceiver to receive, from the PRU, a second message including a result of location measurement and location information of the PRU, based on the request message, and determine an error value for configuring a reference signal by using a location estimated based on the second message, wherein the location information of the PRU includes at least one of location coordinate information or antenna direction information based on the request message.

### [Advantageous Effects of Invention]

As a method of reducing errors due to uncertainty in the wireless section, when obtaining known location information from a positioning reference unit that knows its actual location, and as a separate procedure, obtaining the signal measurement result of the target terminal through configuring a location reference signal, the location server may recognize the error between the location estimate value and the actual location, and by applying a correction value from this, there is an effect of reducing an error that may occur when estimating the location of another general terminal.

### [Brief Description of Drawings]

FIG. 1 is a diagram illustrating the structure of an LTE system according to an embodiment of the disclosure.
FIG. 2 is a diagram illustrating a radio protocol structure in an LTE system according to an embodiment of the disclosure.
FIG. 3 is a diagram illustrating the structure of a next-generation mobile communication system according to an embodiment of the disclosure.
FIG. 4 is a diagram illustrating a radio protocol structure of a next-generation mobile communication system according to an embodiment of the disclosure.
FIG. 5 is a block diagram illustrating the internal structure of a UE according to an embodiment of the disclosure.
FIG. 6 is a block diagram illustrating the configuration of a base station according to an embodiment of the disclosure.
FIG. 7A is a flowchart of a procedure for acquiring location information in the case of a fixed PRU.
FIG. 7B is a flowchart of a procedure for acquiring location information in the case of a fixed PRU.
FIG. 8A is a flowchart of a procedure for acquiring location information in the case of a mobile PRU.
FIG. 8B is a flowchart of a procedure for acquiring location information in the case of a mobile PRU.

### [Mode for the Invention]

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in the embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

Furthermore, the "unit" in the embodiments may include one or more processors. In the following description of the disclosure, a detailed description of known functions or configurations incorporated herein will be omitted when it is determined that the description may make the subject matter of the disclosure unnecessarily unclear.

Hereinafter, embodiments of the disclosure will be described with reference to the accompanying drawings. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, the disclosure will be described using terms and names defined in the 3rd generation partnership project long term evolution (3GPP LTE) standards for the sake of descriptive convenience. However, the disclosure is not limited by these terms and names, and may be applied in the same way to systems that conform other standards. In the disclosure, the term "eNB" may be interchangeably used with the term "gNB". That is, a base station described as "eNB" may indicate "gNB". Also, the term "terminal" may refer to mobile phones, NB-IoT devices, sensors, and other wireless communication devices.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. Of course, examples of the base station and the terminal are not limited thereto.

In particular, the disclosure may be applied to 3GPP NR (5th generation mobile communication standard). The disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB". That is, a base station described as "eNB" may indicate "gNB". Also, the term "terminal" may refer to mobile phones, NB-IoT devices, sensors, and other wireless communication devices.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) {or a mobile station (MS)} transmits data or control signals to a base station (BS) (eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system subsequent to LTE, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of LTEs in a cell, enhancement coverage of LTEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the LTEs supporting mMTC may require wider coverage than those of other services provided by the 5G communication system because the UEs are likely to be located in a shadow area, such as a basement of a building, which is not covered by the cell due to the nature of the service. The LTE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10 -5 or less. Therefore, for the services supporting URLLC, a 5G system must provide a transmit time interval(TTI) shorter than those of other services, and may also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In order to satisfy different requirements of the respective services, different transmission/reception techniques and transmission/reception parameters may be used between services in order to satisfy different requirements of the respective services. However, the above- described mMTC, URLLC, and eMBB are only examples of different types of services, and service types to which the disclosure is applicable are not limited to the above-described examples.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

Hereinafter, embodiments of the disclosure will be described in detail with reference to the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

According to an embodiment of the disclosure, when a positioning integrity calculation entity delivers a calculation result to a positioning integrity decision entity, a method of reducing unnecessary repeated transmission may be introduced to control frequent signals.

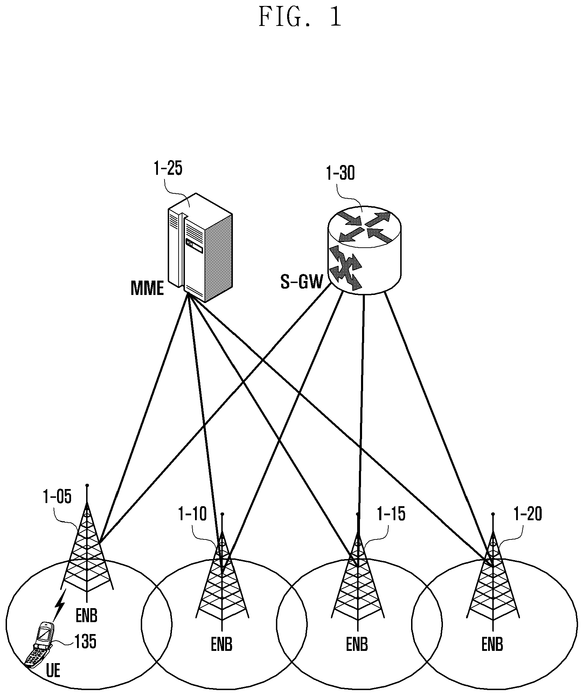

FIG. 1 is a diagram illustrating the structure of an existing LTE system.

Referring to FIG. 1, as illustrated, a radio access network of the LTE system may be composed of a next-generation base station (evolved Node B, hereinafter, ENB, Node B or base station) 1-05, 1-10, 1-15, and 1-20, a mobility management entity (MME) 1-25, and a serving-gateway (S-GW) 1-30. A user equipment (hereinafter, UE or terminal) 1-35 may access an external network through the ENBs 1-05 to 1-20 and the S-GW 1-30.

In FIG. 1, the ENBs 1-05 to 1-20 may correspond to the existing Node B of a UMTS system. The ENBs may be connected to the LTE 1-35 through a radio channel and perform a more complex role than the existing Node B. In the LTE system, all user traffic including real-time services such as Voice over IP (VoIP) through Internet protocol may be serviced through shared channels. Accordingly, a device for scheduling by collecting state information such as buffer states of the UEs, available transmission power states, channel states, etc. may be required, and the ENBs 1-05 to 1-20 may perform this. One ENB may typically control multiple cells. For example, in order to implement a transmission rate of 100 Mbps, the LTE system may use, for example, the orthogonal frequency division multiplexing (OFDM) in a 20 MHz bandwidth as a radio access technology. In addition, an adaptive modulation & coding (AMC) scheme determining a modulation scheme and a channel coding rate based on the channel state of the UE may be applied.

The S-GW 1-30 is a device providing a data bearer, and may generate or remove the data bearer under the control of the MME 1-25. The MME is a device in charge of various control functions as well as a mobility management function for the UE, and may be connected to a plurality of base stations.

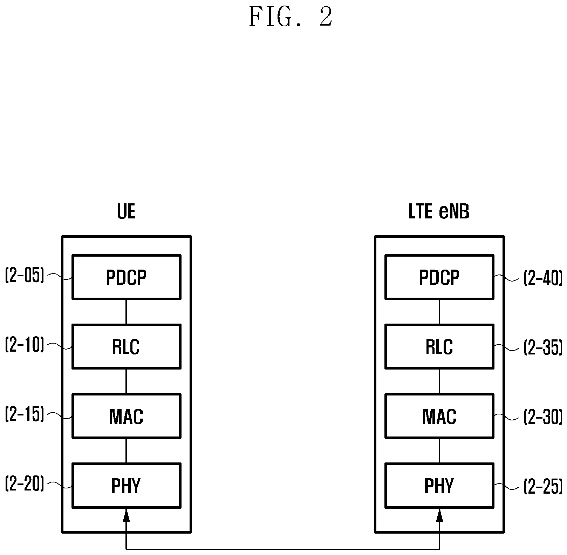

FIG. 2 is a diagram illustrating a radio protocol structure in an LTE system according to an embodiment of the disclosure.

Referring to FIG. 2, the radio protocol of the LTE system may be composed of a packet data convergence protocol (PDCP) 2-05 and 2-40, a radio link control (RLC) 2-10 and 2-35, and a medium access control (MAC) 2-15 and 2-30 in the UE and ENB, respectively. The PDCP may perform operations of IP header compression/decompression, etc. Main functions of the PDCP may be summarized as follows.
- Header compression and decompression: robust header compression (ROHC) only
- Transfer of user data
- In-sequence delivery of upper layer protocol data units (PDUs) at packet data convergence protocol (PDCP) re-establishment procedure for radio link control (RLC) acknowledged mode (AM)
- For split bearers in dual connectivity (DC) (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 2-10 and 2-35 may perform the automatic repeat request (ARQ) operation and the like by reconfiguring a PDCP packet data unit (PDU) to an appropriate size. Main functions of the RLC may be summarized below.
- Transfer of upper layer PDUs
- Error correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC service data unit (SDU) discard (only for unacknowledged mode (UM) and AM data transfer)
- RLC re-establishment

The MACs 2-15 and 2-30 may be connected to several RLC layers configured in one UE, and perform operations of multiplexing RLC PDUs into MAC PDUs and demultiplexing RLC PDUs from MAC PDUs. Main functions of the MAC may be summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through hybrid automatic repeat request (HARQ)
- Priority handling between logical channels of one UE
- Priority handling between UEs by means of dynamic scheduling
- Multimedia broadcast and multicast service (MBMS) service identification
- Transport format selection
- Padding

The physical layers 2-20 and 2-25 channel-code and modulate upper layer data, make OFDM symbols and transmit the OFDM symbols through a radio channel, or demodulate and channel-decode the OFDM symbols received through the radio channel and transmit the OFDM symbols to upper layers.

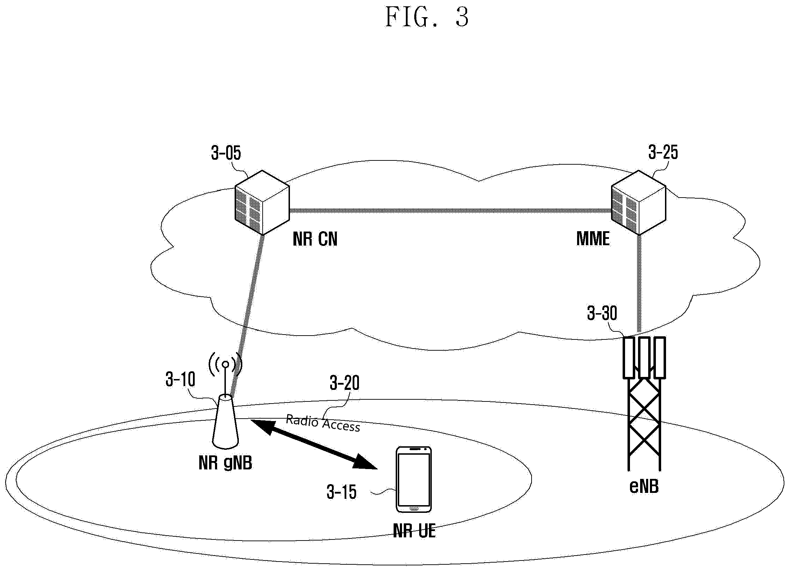

FIG. 3 is a diagram illustrating the structure of a next-generation mobile communication system according to an embodiment of the disclosure.

Referring to FIG. 3, a radio access network of the next-generation mobile communication system (hereinafter, NR or 5G) may be composed of a next-generation base station (new radio node B, hereinafter, NR gNB or NR base station) 3-10 and a new radio core network (NR CN) 3-05. A next-generation radio user equipment (new radio user equipment, NR UE, or terminal) 3-15 may access an external network through the NR gNB 3-10 and the NR CN 3-05.

In FIG. 3, the NR gNB 3-10 may correspond to an evolved Node B (eNB) of the existing LTE system. The NR gNB may be connected to the NR UE 3-15 through a radio channel and may provide a service superior to that of the existing Node B. In the next-generation mobile communication system, all user traffic may be serviced through the shared channel. Accordingly, a device for scheduling by collecting state information such as a buffer state of the UEs, an available transmission power state, a channel state, etc. may be required, and the NR NB 3-10 may perform this. One NR gNB may usually control multiple cells. In the next-generation mobile communication system, a bandwidth greater than or equal to the current maximum bandwidth to implement ultra-high-speed data transmission compared with current LTE may be applied. In addition, an additional beamforming technology by using orthogonal frequency division multiplexing (OFDM) as a radio access technology may be applied. In addition, an adaptive modulation & coding (hereinafter, referred to as AMC) scheme for determining a modulation scheme and a channel coding rate according to the channel state of the UE may be applied.

The NR CN 3-05 may perform functions such as mobility support, bearer configuration, QoS configuration, and the like. The NR CN is a device in charge of various control functions as well as a mobility management function for the UE, and may be connected to a plurality of base stations. In addition, the next-generation mobile communication system may be linked with the existing LTE system, and the NR CN may be connected to the MME 3-25 through a network interface. The MME may be connected to the existing base station eNB 3-30.

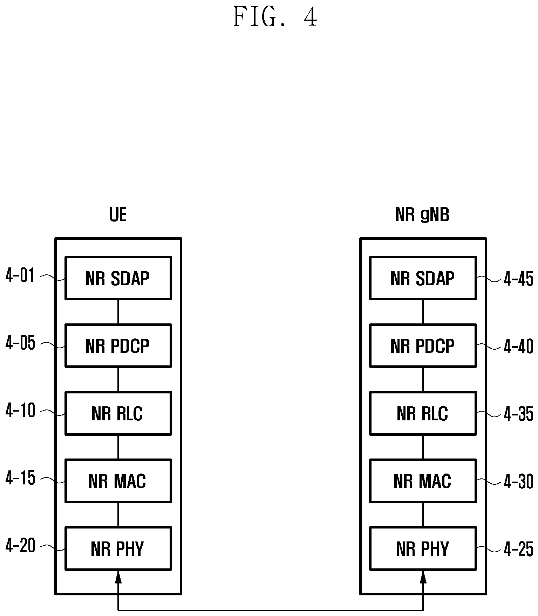

FIG. 4 is a diagram illustrating a radio protocol structure of a next-generation mobile communication system according to an embodiment of the disclosure.

Referring to FIG. 4, the radio protocol of the next-generation mobile communication system is composed of an NR service data adaptation protocol (SDAP) 4-01 and 4-45, NR PDCP 4-05 and 4-40, NR RLC 4-10 and 4-35, and NR MAC 4-15 and 4-30 in a UE and an NR base station, respectively.

Main functions of the NR SDAP 4-01 and 4-45 may include some of the following functions.
- Transfer of user plane data
- Mapping between a QoS flow and a DRB for both down link (DL) and up link (UL)
- Marking QoS flow ID in both DL and UL packets
- Reflective QoS flow to DRB mapping for the UL SDAP PDUs

With respect to the SDAP layer, the UE may be configured by a radio resource control (RRC) message received from the base station whether to use a SDAP layer header or the function of the SDAP layer for each PDCP layer, for each bearer, or for each logical channel. When the SDAP header is configured, the UE may be instructed to update or reconfigure mapping information for uplink and downlink QoS flows and data bearers by using a non-access stratum (NAS) quality of service (QoS) reflected configuration 1-bit indicator (NAS reflective QoS) and an AS QoS reflected configuration 1-bit indicator (AS reflective QoS) of the SDAP header. The SDAP header may include QoS flow ID information indicating the QoS. The QoS information may be used for data processing priority, scheduling information, etc. to support a smooth service.

Main functions of the NR PDCP 4-05 and 4-40 may include some of the following functions.
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, the reordering of the NR PDCP device may refer to a function of reordering PDCP PDUs received from a lower layer in order based on a PDCP sequence number (SN). The reordering of the NR PDCP device may include a function to deliver data to the upper layer in the rearranged order, or may include a function to directly deliver data without considering the order, a function to record lost PDCP PDUs by rearranging the order, a function to report the state of lost PDCP PDUs to the transmitting side, and a function to request retransmission for lost PDCP PDUs.

Main functions of the NR RLC 4-10 and 4-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, the in-sequence delivery of the NR RLC device may refer to a function of sequentially delivering RLC SDUs received from a lower layer to an upper layer. The in-sequence delivery of the NR RLC device may include a function to reassemble and deliver divided RLC SDUs when originally one RLC SDU is divided into several RLC SDUs and received.

The in-sequence delivery of the NR RLC device may include a function to reorder the received RLC PDUs based on RLC sequence number (SN) or PDCP sequence number (SN), a function to reorder and record the lost RLC PDUs, a function to report the state of the lost RLC PDUs to the transmitting side, a function to request retransmission of the lost RLC PDUs.

The in-sequence delivery of the NR RLC device may include a function of sequentially delivering only the RLC SDUs before the lost RLC SDU to the upper layer when there is a missing RLC SDU.

The in-sequence delivery of the NR RLC device may include a function of sequentially delivering all RLC SDUs received before the timer starts to the upper layer when a predetermined timer has expired even if there is a lost RLC SDU.

The in-sequence delivery of the NR RLC device may include a function of sequentially delivering all RLC SDUs received so far to the upper layer when a predetermined timer has expired even if there is a lost RLC SDU.

The NR RLC device may process RLC PDUs in the order they are received to deliver the RLC PDUs to the NR PDCP device regardless of order of sequence numbers (out-of-sequence delivery).

When receiving segments, the NR RLC device may receive segments stored in the buffer or to be received later, reconstruct the segments into one complete RLC PDU, and deliver the same to the NR PDCP device.

The NR RLC layer may not include a concatenation function, and may perform the concatenation function in the NR MAC layer or replace the concatenation function with a multiplexing function of the NR MAC layer.

In the above description, the out-of-sequence delivery of the NR RLC may refer to a function of directly delivering RLC SDUs received from a lower layer to an upper layer regardless of order. The out-of-sequence delivery of the NR RLC device may include a function of reassembling and delivering when originally one RLC SDU is divided into several RLC SDUs and received. The out-of-sequence delivery of the NR RLC device may include a function of storing the RLC SN or PDCP sequence number (SN) of the received RLC PDUs, arranging the order, and recording the lost RLC PDUs.

The NR MAC 4-15 and 4-30 may be connected to several NR RLC layer devices configured in one UE, and the main functions of the NR MAC may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 4-20 and 4-25 may channel-code and modulate upper layer data, make OFDM symbols and transmit the OFDM symbols through a radio channel, or may demodulate and channel-decode the OFDM symbols received through the radio channel and transmit them to upper layers.

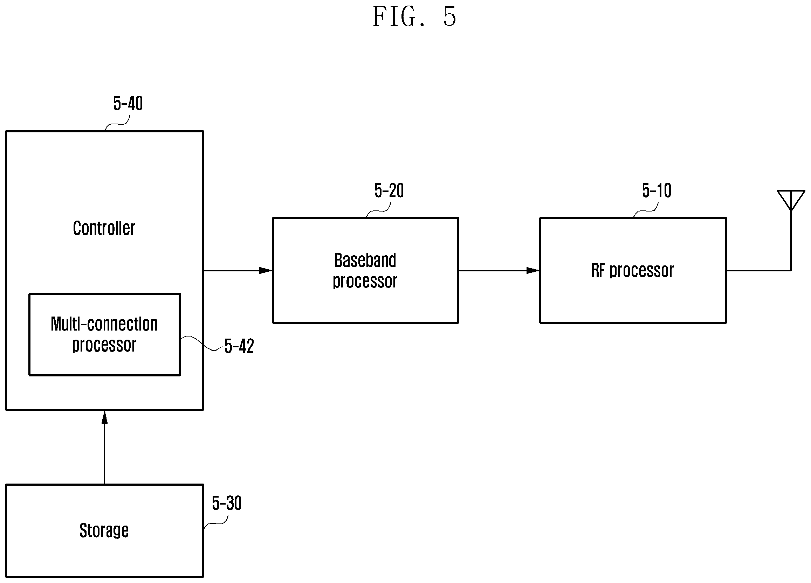

FIG. 5 is a block diagram illustrating the internal structure of a UE according to an embodiment of the disclosure.

Referring to the above diagram, the UE may include a radio frequency (RF) processor 5-10, a baseband processor 5-20, a storage 5-30, and a controller 5-40.

The RF processor 5-10 performs a function for transmitting and receiving a signal through a radio channel, such as band conversion and amplification of a signal. That is, the RF processor 5-10 up-converts a baseband signal provided from the baseband processor 5-20 into an RF band signal, transmits the RF band signal through an antenna, and down-converts the RF band signal received through the antenna to the baseband signal. For example, the RF processor 5-10 may include a transmission filter, a reception filter, an amplifier, a mixer, an oscillator, a digital to analog converter (DAC), an analog to digital converter (ADC), etc. In FIG. 5, only one antenna is illustrated, but the UE may include a plurality of antennas. In addition, the RF processor 5-10 may include a plurality of RF chains. Furthermore, the RF processor 5-10 may perform beamforming. For the beamforming, the RF processor 5-10 may adjust the phase and magnitude of each of signals transmitted and received through a plurality of antennas or antenna elements. In addition, the RF processor 5-10 may perform MIMO, and receive multiple layers when performing the MIMO operation.

The baseband processor 5-20 performs a function of converting between a baseband signal and a bit string according to a physical layer standard of the system. For example, when transmitting data, the baseband processor 5-20 generates complex symbols by encoding and modulating a transmitted bit string. In addition, when receiving data, the baseband processor 5-20 restores a received bit string by demodulating and decoding the baseband signal provided from the RF processor 5-10. For example, in the case of following an orthogonal frequency division multiplexing (OFDM) scheme, when transmitting data, the baseband processor 5-20 generates complex symbols by encoding and modulating a transmitted bit string, maps the complex symbols to subcarriers, and then configures OFDM symbols through an inverse fast Fourier transform (IFFT) operation and cyclic prefix (CP) insertion. In addition, when receiving data, the baseband processor 5-20 divides the baseband signal provided from the RF processor 5-10 into OFDM symbol units, restores signals mapped to subcarriers through a fast Fourier transform (FFT) operation, and then restores a received bit string through demodulation and decoding.

The baseband processor 5-20 and the RF processor 5-10 transmits and receives signals as described above. Accordingly, the baseband processor 5-20 and the RF processor 5-10 may be referred to as a transmitter, a receiver, a transceiver, or a communicator. Furthermore, at least one of the baseband processor 5-20 and the RF processor 5-10 may include a plurality of communication modules to support a plurality of different radio access technologies. In addition, at least one of the baseband processor 5-20 and the RF processor 5-10 may include different communication modules to process signals of different frequency bands. For example, the different radio access technologies may include a wireless LAN (e.g., IEEE 802.11), a cellular network (e.g., LTE), or the like. In addition, the different frequency bands may include a super high frequency (SHF) (e.g., 2.NRHz, NRhz) band and a millimeter wave (e.g., 60 GHz) band.

The storage 5-30 stores data such as a basic program, an application program, and configuration information for the operation of the UE. In particular, the storage 5-30 may store information related to a second access node performing wireless communication by using the second radio access technology. In addition, the storage 5-30 provides stored data according to the request of the controller 5-40.

The controller 5-40 controls overall operations of the UE. For example, the controller 5-40 transmits and receives signals through the baseband processor 5-20 and the RF processor 5-10. In addition, the controller 5-40 writes data in the storage 5-40 and reads the data. To this end, the controller 5-40 may include at least one processor. For example, the controller 5-40 may include a communication processor (CP) that controls for communication and an application processor (AP) that controls an upper layer such as an application program.

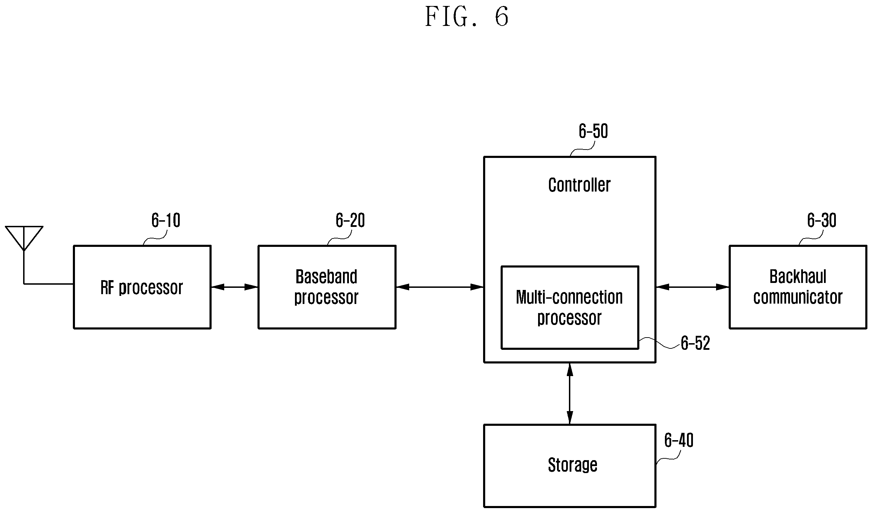

FIG. 6 is a block diagram illustrating the configuration of a base station according to an embodiment of the disclosure.

As illustrated in FIG. 6, the base station is configured including an RF processor 6-10, a baseband processor 6-20, a communicator 6-30, a storage 6-40, and a controller 6-50.

The RF processor 6-10 performs a function for transmitting and receiving a signal through a radio channel, such as band conversion and amplification of the signal. That is, the RF processor 6-10 up-converts the baseband signal provided from the baseband processor 6-20 into an RF band signal, transmits the same through an antenna, and down-converts the RF band signal received through the antenna into a baseband signal. For example, the RF processor 6-10 may include a transmission filter, a reception filter, an amplifier, a mixer, an oscillator, a DAC, an ADC, and the like. Although only one antenna is illustrated in FIG. 6, the first access node may include a plurality of antennas. In addition, the RF processor 6-10 may include a plurality of RF chains. Furthermore, the RF processor 6-10 may perform beamforming. For the beamforming, the RF processor 6-10 may adjust the phase and magnitude of each of signals transmitted and received through a plurality of antennas or antenna elements. The RF processor may perform a downlink MIMO operation by transmitting one or more layers.

The baseband processor 6-20 performs a function of converting between a baseband signal and a bit string according to the physical layer standard of the first radio access technology. For example, when transmitting data, the baseband processor 6-20 generates complex symbols by encoding and modulating a transmitted bit string. In addition, when receiving data, the baseband processor 6-20 restores a received bit string through demodulating and decoding the baseband signal provided from the RF processor 6-10. For example, in the case of following the OFDM scheme, when transmitting data, the baseband processor 6-20 generates complex symbols by encoding and modulating a transmitted bit string, maps the complex symbols to subcarriers, and then configures OFDM symbols through IFFT operation and CP insertion. In addition, when receiving data, the baseband processor 6-20 divides the baseband signal provided from the RF processor 6-10 into OFDM symbol units, restores signals mapped to subcarriers through FFT operation, and then restores a received bit string through demodulation and decoding. The baseband processor 6-20 and the RF processor 6-10 transmits and receives signals as described above. Accordingly, the baseband processor 6-20 and the RF processor 6-10 may be referred to as a transmitter, a receiver, a transceiver, a communicator, or a wireless communicator.

The backhaul communicator 6-30 provides an interface for performing communication with other nodes in the network. That is, the backhaul communicator 6-30 converts a bit string transmitted from the main base station to another node, for example, an auxiliary base station, a core network, or the like, into a physical signal, and converts a physical signal received from the other node into a bit string.

The storage 6-40 stores data such as a basic program, an application program, configuration information, and the like for the operation of the main base station. In particular, the storage 6-40 may store information on a bearer allocated to an accessed UE, a measurement result reported from the accessed UE, and the like. In addition, the storage 6-40 may store information serving as a criterion for determining whether to provide or stop multiple connections to the UE. In addition, the storage 6-40 provides stored data according to the request of the controller 6-50.

The controller 6-50 controls overall operations of the main base station. For example, the controller 6-50 transmits and receives signals through the baseband processor 6-20 and the RF processor 6-10, or through the backhaul communicator 6-30. In addition, the controller 6-50 writes data in the storage 6-40 and reads the data. For this purpose, the controller 6-50 may include at least one processor.

In the disclosure, the PRU is a positioning reference unit and used as a positioning reference unit or a PRU.

The following operations are possible in the positioning capability-related procedures between the UE and the location server.
·Opt1. A UE solely indicates.
   . PRU includes (1 bit) PRU indicator in LPP Provide Capabilities.
   · In addition, PRU includes bits for capability on location and antenna orientation info reporting.
      · 1 bit for ability to provide its own location coordination to LMF.
      . 1 bit for ability to provide its antenna orientation to LMF.
   · As another example, when indicating the location info or antenna orientation information, it may itself mean a PRU indicator, so the PRU indicator may be omitted.
   . In addition, an indicator indicating whether the PRU is a mobile PRU or a fixed PRU may be included.
   . In addition, an indicator indicating whether the PRU is a UE-type PRU or a network node-type PRU may be included.
·Opt2. A location management function (LMF) requests indications and provides indications to a LTE accordingly.
   . LMF include the indicator to ask for PRU related capability in LPP RqeustCapabilities.
      . In addition, LMF ask for which information can be provided, on location coordinate and antenna orientation.
      . In addition, LMF ask for mobile PRU or fixed PRU.
   . If the receiving UE is a PRU, the UE indication method of Opt1 is followed.

Instead of communicating between the location server and the target UE by adding PRU information to the above positioning capability procedure, in another embodiment, when the target UE requests AD (assistance date, assistance information) from the location server, the following information may be included and transmitted.
. PRU indicator: Indicator indicating that it is a PRU
. Indicator that indicates provision of location coordination information is available
. Indicator that indicates provision of antenna orientation information is available
. Mobile or fixed PRU indication: Indicator of mobile or fixed PRU
. PRU type: Indicator of UE type or network node type

After the capability information of the PRU reaches the location server, the following request location information procedure may be performed between the location server and the target UE.

If LMF identify the target UE as PRU, LPP Request location information message can include
. In the case of UE assisted mode (UEA) (in this case, the UEA mode indicator may be included in request location information),
   . LMF sends LPP Request Location Information msg to the target UE (PRU) including at least one of the followings:
      . Request on location coordinate information
         . Additionally, request on the uncertainty (or accuracy level) information on the location coordinate information
      . Request on antenna orientation information
   . Above request information can be either in common Request field or method specific Request field in Request Location Information message
   . Apart from the above, the Request Location Information message itself requests a measurement result through a separate positioning method.
. PRU can report the above information if requested, to LMF in Provide Location Information message. In addition, the measurement result through the separate positioning method is reported to LMF.
. In the case of UE based mode (UEB) (in this case, the UEB mode indicator may be included in request location information),
   . LMF sends LPP Request Location Information msg to the target UE (PRU) including at least one of the followings:
      . Request on location coordinate information
         . Additionally, request on the uncertainty (or accuracy level) information on the location coordinate information
      . Request on antenna orientation information
   . Above request information can be either in common Request field or method specific Request field in Request Location Information message
   . Apart from the above, the Request Location Information message itself requests a measurement result through a separate positioning method.
. PRU can report the above information if requested, to LMF in Provide Location Information message. In addition, the measurement result through the separate positioning method is reported to LMF.
   . Additionally, the difference value between the location coordinate information known as the PRU and the location information estimated by self-measuring using the UEB scheme may be reported to the LMF.

The following shows detailed details of each piece of information transmitted by the PRU to the location server.
· Location coordinate information comprises of:
· Geographical coordinate information (i.e., GNSS/GPS 2 dimensional coordinates)
· Latitude
· Longitude
· Unit indication: latitude/longitude unit
· Height of antenna
· Absolute altitude or relative altitude with basement altitude
· This location coordinate information can include or be associated with
· confidence level or
· accuracy level information or
· Uncertainty of location coordinate
· Horizontal uncertainty and
· Vertical uncertainty
· Unit of this can be some distance / or signal reception time difference (ms or µ sec)
· Antenna orientation information comprises of:
· Antenna plane azimuth angle
· Antenna plane elevation angle

When indicating that the target UE is a PRU, the operation of the LMF may vary depending on whether the target UE is a fixed PRU or a mobile PRU.
. In the case of indicating a fixed PRU,
. Single provision of location information/ antenna orientation info can be used continuously.
. In the case of indicating a mobile PRU,
. LMF can request PRU's location coordinate information and/or antenna orientation info on every transmission of Provide location information message from PRU via corresponding indicator.
. LMF Request Location Information can include
. Indicator on location coordination information on every subsequent Provide Location Information msg transmission
· Indicator on antenna orientation information on every subsequent Provide Location Information msg transmission
· PRU sends above configured information per every transmission of Provide Location Information message to LMF

The operation of the LMF may vary depending on whether the PRU type is a UE type or a RAN node type.
. In the case of indicating a UE type,
. LMF request Location Information and get the location information from the PRU.
· In more detail, previously the LMF provided assistant data (AD) to the PRU and transmitted the corresponding positioning reference signal (PRS) measurement or sounding reference signal (SRS), or performed an operation of reporting the measurement result or the location information derived from the result to the LMF through radio access technology (RAT)-independent signal measurement.
· In the case of indicating a RAN node type,
. LMF request the PRU for the transmission of PRS by configuring necessary PRS information and/or measurement of SRS transmitted by other UEs by configuring necessary SRS transmission information a priori.

That is, when the PRU is a UE type, the LMF may perform the same operation as the existing target UE. If the PRU is a RAN node type, the LMF may request PRS transmission from the PRU and request measurement of SRS transmission from another UE.

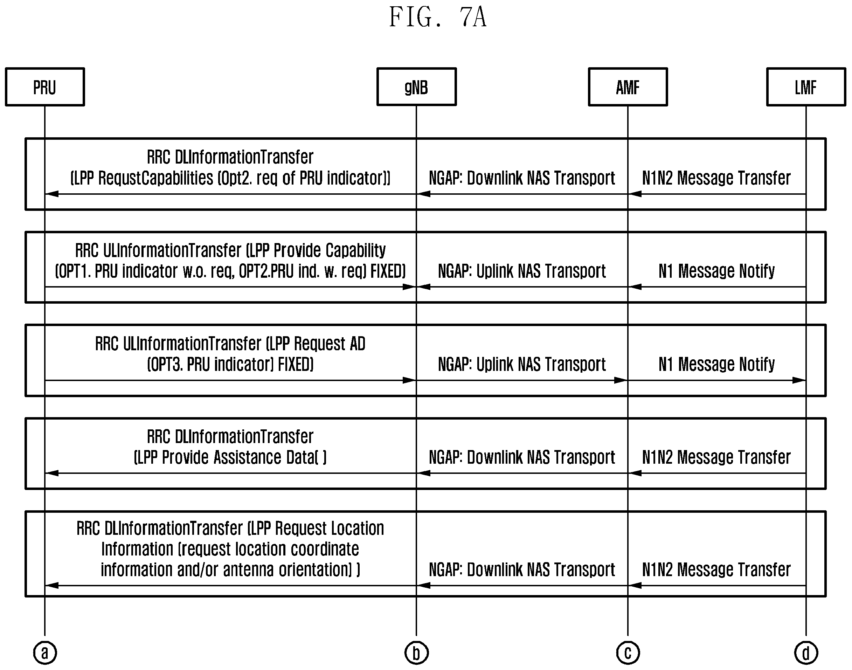

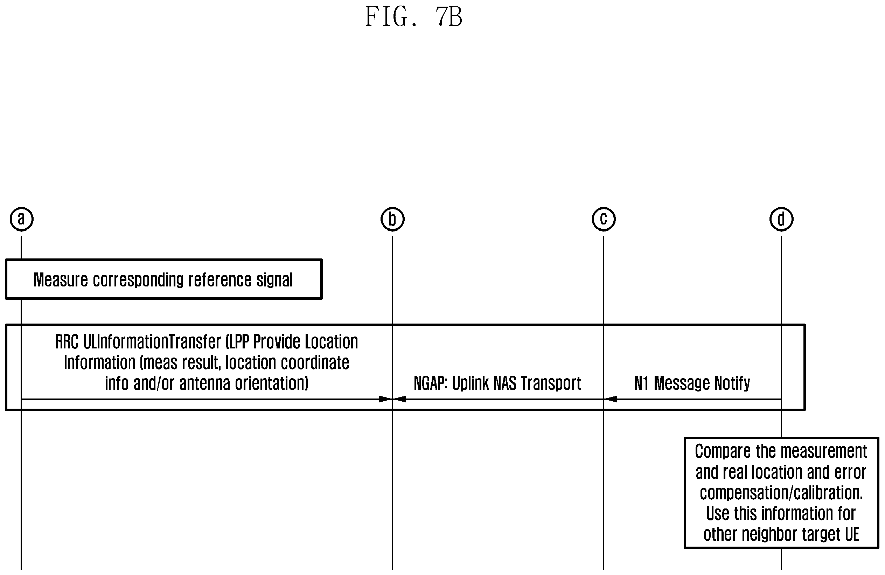

FIGS. 7A and 7B are flowcharts in which the LMF requests location information when the PRU is a fixed PRU.

The PRU may receive a capability request message including an indicator asking to identify whether it is a PRU from the LMF.

Upon receiving this message, or even without this message, when receiving the capability request message from the LMF, the PRU may deliver the Provide Capability message to the LMF by including an indicator indicating that it is a PRU, or additionally including an indicator indicating that various previously mentioned PRU-related information may be delivered.

In another embodiment, an indicator indicating that it is a PRU and an indicator indicating that it is possible to deliver PRU-related information may be included in the AD request message and delivered to the LMF after the capability procedure.

When this PRU-related message is delivered, if information called fixed PRU is delivered to the LMF, the LMF may include a location coordinate request and/or antenna orientation information request indicator in the location information request message and transmit the same to the PRU. For example, when the information called fixed PRU is delivered, the LMF may be configured to be reported location coordinate information and/or antenna orientation information from the PRU once, and the previously reported location coordinate information and/or antenna orientation information may be continuously used in performing location estimation and error value calculation. In addition to this indicator, the LMF may include, in the location information request message, information indicating a specific positioning method for performing location measurement and other configuration information for reporting in the same manner as that included in the existing location information request message.

Upon receiving the information, the PRU uses the given method to measure or estimate the location, and includes the result in the provide location information message. Additionally, the PRU may deliver the PRU's own location coordinate and/or antenna orientation information to the LMF by including the same in the provide location information message.

After receiving the information, the LMF may compare the actual location information of the PRU with the estimated location based on the measured result value measured by using a specific method, calculate the error value by integrating the compared location with information such as configured PRS and SRS, and inversely calculate the error value to find a compression term that may be used to provide configurations for PRS and SRS measurements.

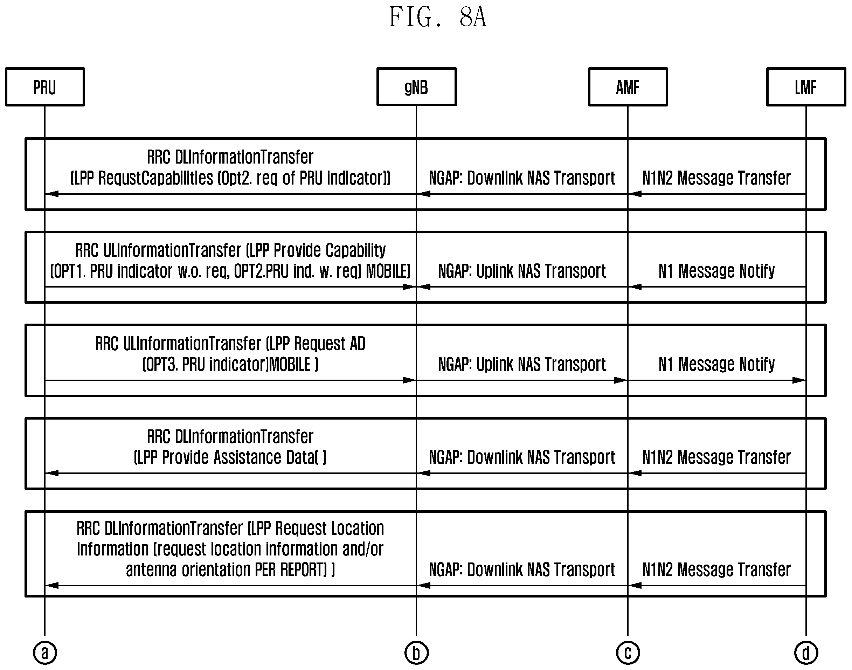

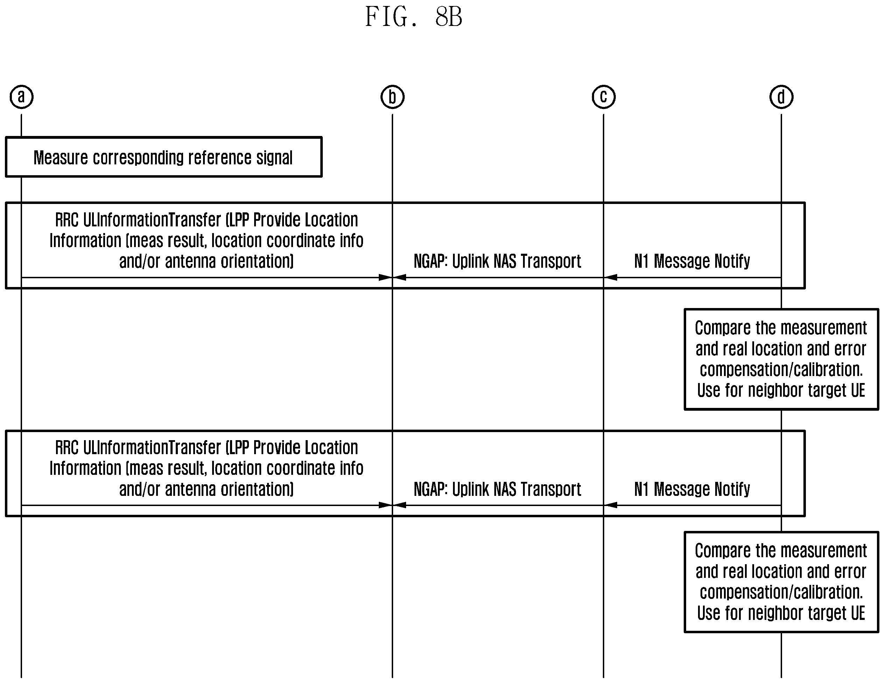

FIGS. 8A and 8B are flowcharts in which the LMF requests location information when the PRU is a mobile PRU.

The PRU may receive a capability request message including an indicator asking to identify whether it is a PRU from the LMF.

Upon receiving this message, or even without this message, when receiving the capability request message from the LMF, the PRU may deliver the Provide Capability message to the LMF by including an indicator indicating that it is a PRU, or additionally including an indicator indicating that various previously mentioned PRU-related information may be delivered.

In another embodiment, an indicator indicating that it is a PRU and an indicator indicating that it is possible to deliver PRU-related information may be included in the AD request message and delivered to the LMF after the capability procedure.

When this PRU-related message is delivered, if information called mobile PRU is delivered to the LMF, the LMF may deliver the location information request message, including an indicator to add location coordinate request and/or antenna orientation information to each location information report. In addition to this indicator, a specific positioning method and the configuration information for reporting the specific positioning method are the same as the existing location information request message.

Upon receiving the information, the PRU uses the given method to measure or estimate the location, and includes the result in the provide location information message. Additionally, the PRU may deliver the PRU's own location coordinate and/or antenna orientation information to the LMF by including the same in the provide location information message. When the measurement result or location estimation value is transmitted later, the PRU may always deliver the message to the LMF by including the PRU's own location coordinate and/or antenna orientation information in the message.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims and equivalents thereof.

## Claims

1. A method performed by a positioning reference unit (PRU) in a communication system, the method comprising:
transmitting, to a location management function (LMF) entity, a first message including PRU indication information indicating the PRU;
receiving, from the LMF entity, a request message for requesting provision of location-related information based on the first message;
performing a measurement of a location based on the request message; and
transmitting, to the LMF entity, a second message including a result of the measurement and location information of the PRU,
wherein the location information of the PRU includes at least one of location coordinate information or antenna direction information based on the request message.

2. The method of claim 1,
wherein the first message further includes capability information of the PRU, the capability information of the PRU including at least one of a first indicator indicating that provision of the location coordinate information is available or a second indicator indicating that provision of the antenna direction information is available, and
wherein the request message includes information indicating provision of at least one of the location coordinate information or the antenna direction information, based on the capability information of the PRU.

3. The method of claim 1, wherein the first message further includes an indicator indicating whether the PRU is a fixed PRU or a mobile PRU.

4. The method of claim 3,
wherein, in case that the indicator indicates that the PRU is the mobile PRU, the request message includes an additional indicator, and
wherein the additional indicator indicates to add at least one of the location coordinate information or the antenna direction information to the second message whenever the second message is transmitted.

5. A method performed by a location management function (LMF) entity in a communication system, the method comprising:
receiving, from a positioning reference unit (PRU), a first message including PRU indication information indicating the PRU;
transmitting, to the PRU, a request message for requesting provision of location-related information based on the first message;
receiving, from the PRU, a second message including a result of location measurement and location information of the PRU, based on the request message; and
determining an error value for configuring a reference signal by using a location estimated based on the second message,
wherein the location information of the PRU includes at least one of location coordinate information or antenna direction information based on the request message.

6. The method of claim 5,
wherein the first message further includes capability information of the PRU, the capability information of the PRU including at least one of a first indicator indicating that provision of the location coordinate information is available or a second indicator indicating that provision of the antenna direction information is available, and
wherein the request message includes information indicating provision of at least one of the location coordinate information or the antenna direction information, based on the capability information of the PRU.

7. The method of claim 5, wherein the first message further includes an indicator indicating whether the PRU is a fixed PRU or a mobile PRU.

8. The method of claim 7,
wherein, in case that the indicator indicates that the PRU is the mobile PRU, the request message includes an additional indicator, and
wherein the additional indicator indicates to add at least one of the location coordinate information or the antenna direction information to the second message whenever the second message is transmitted.

9. A positioning reference unit (PRU) in a communication system, the PRU comprising:
a transceiver; and
a controller configured to:
control the transceiver to transmit, to a location management function (LMF) entity, a first message including PRU indication information indicating the PRU,
control the transceiver to receive, from the LMF entity, a request message for requesting provision of location-related information based on the first message,
perform a measurement of a location based on the request message, and
control the transceiver to transmit, to the LMF entity, a second message including a result of the measurement and location information of the PRU,
wherein the location information of the PRU includes at least one of location coordinate information or antenna direction information based on the request message.

10. The PRU of claim 9,
wherein the first message further includes capability information of the PRU, the capability information of the PRU including at least one of a first indicator indicating that provision of the location coordinate information is available or a second indicator indicating that provision of the antenna direction information is available, and
wherein the request message includes information indicating provision of at least one of the location coordinate information or the antenna direction information, based on the capability information of the PRU.

11. The PRU of claim 9, wherein the first message further includes an indicator indicating whether the PRU is a fixed PRU or a mobile PRU.

12. The PRU of claim 11,
wherein, in case that the indicator indicates that the PRU is the mobile PRU, the request message includes an additional indicator, and
wherein the additional indicator indicates to add at least one of the location coordinate information or the antenna direction information to the second message whenever the second message is transmitted.

13. A location management function (LMF) entity in a communication system, the LMF entity comprising:
a transceiver; and
a controller configured to:
control the transceiver to receive, from a positioning reference unit (PRU), a first message including PRU indication information indicating the PRU,
control the transceiver to transmit, to the PRU, a request message for requesting provision of location-related information based on the first message,
control the transceiver to receive, from the PRU, a second message including a result of location measurement and location information of the PRU, based on the request message, and
determine an error value for configuring a reference signal by using a location estimated based on the second message,
wherein the location information of the PRU includes at least one of location coordinate information or antenna direction information based on the request message.

14. The LMF entity of claim 13,
wherein the first message further includes capability information of the PRU, the capability information of the PRU including at least one of a first indicator indicating that provision of the location coordinate information is available or a second indicator indicating that provision of the antenna direction information is available, and
wherein the request message includes information indicating provision of at least one of the location coordinate information or the antenna direction information, based on the capability information of the PRU.

15. The LMF entity of claim 13,
wherein the first message further includes an indicator indicating whether the PRU is a fixed PRU or a mobile PRU,
wherein, in case that the indicator indicates that the PRU is the mobile PRU, the request message includes an additional indicator, and
wherein the additional indicator indicates to add at least one of the location coordinate information or the antenna direction information to the second message whenever the second message is transmitted.
